# EUROPEAN PATENT APPLICATION

(11) **EP 2 843 557 A1**
(43) Date of publication of application: **04.03.2015**
(21) Application number: 14158684.2
(22) Date of filing: 10.03.2014
(51) Int. Cl.: G06F 11/30

(54) **Processor module, server system and method of controlling processor module**

(30) Priority: 11.06.2013 KR 20130066599
(71) Applicant: Samsung Electronics Co., Ltd., Suwon-si Gyeonggi-do 443-742 (KR)
(72) Inventor: Cho, Jun-young, Suwon-si Gyeonggi-do (KR); Yun, Il-kook, Suwon-si Gyeonggi-do (KR)
(74) Representative: Hewett, Jonathan Michael Richard

(57) **Abstract**

A server system includes a plurality of processor modules, a communicator configured to perform communication with an external managing server, and a module manager configured to collect apparatus information about at least one of the plurality of processor modules and to provide an Intelligent Platform Management Interface service with respect to the at least one of the plurality of processor modules for the external managing server.

## Description

The present invention relates to a processor module, server system and a method of controlling the processor module, and more particularly, to a processor module capable of publishing a controller to manage each of a plurality of processor modules, a microserver, and a method of controlling the processor module thereof.

Due to the development of high speed Internet and intranet technologies, there has been demand for server technologies that may process a large amount of data at a high speed. Although rack-mount type cluster server technology emerged to meet this demand, problems have arisen due to its large volume, increased power consumption, and the need to connect each server module via cables, which have limited the possibility of system expansion.

Currently, microservers that use processor modules are being used. A processor module refers to a thin and modulized extension product server that may be fitted to a main body of a microserver system and be operated, which is different from racking up a rack server horizontally as in a rack-mount type server. A so-called "microserver" is a large-scale server or server system in that it enables insertion and installation of numerous servers in a small space, and it is embedded with the core elements of a server such as, for example, one or more central processing units (CPU), memory apparatuses, and operating systems, etc., and it receives support for various controlling functions, such as, for example, power, input/output, and ancillary devices, from the main body to perform the functions of a server.

A server must provide an Intelligent Platform Management Interference (IPMI) service, that is, a server must be configured to understand and control the state of remote or local servers to provide a managing interface for server management. Until now, a microcontroller called a Baseboard Management Controller (BMC) was provided in each micromodule to provide the IPMI function.

A BMC is a microcontroller that is configured to monitor and control power control and voltage, temperature, and the problems of a server. When a BMC is provided, there must also be a network controller and an 8 position 8 contact (8P8C) (also known as an RJ₄₅) Ethernet connector to perform communication with external devices inside each processor module.

Because a plurality of processor modules are provided in a microserver, having a BMC is installed in each of the plurality of processor modules gives rise to a problem of overlapping of functions and inefficiency of costs.

Moreover, when a BMC is provided as aforementioned, a network controller and an 8P8C (RJ45) Ethernet connector must be provided in each processor module, which gives rise to an additional problem in that more area is needed due to the increased number of components, increased power consumption, and increased complexity, costs, etc. to design boards.

The present invention provides a processor module configured to publish a controller that controls each of a plurality of processor modules, a microserver, and a method of controlling the processor module.

Additional features and utilities of the present invention will be set forth in part in the description which follows and, in part, will be obvious from the description, or may be learned by practice of the invention.

The foregoing and/or other features and utilities of the present invention may be achieved by providing a microserver that includes a plurality of processor modules, a communicator configured to perform communication with an external managing server, and a module manager configured to collect apparatus information about at least one of the plurality of processor modules, and to provide an Intelligent Platform Management Interface service with respect to the at least one of the plurality of processor modules for the external managing server.

The Intelligent Platform Management Interface service may be configured to perform at least one of monitoring, logging, recovery, inventory, and hardware control with respect to the processor modules.

The module manager may be configured to virtualize such that a processor module that corresponds to the apparatus information is configured to transmit the apparatus information to the external managing server.

The module manager may be configured to perform hardware control that corresponds to control information about a specific processor module when the control information about the specific processor module is received from the external managing server.

The module manager may be configured to sense an abnormality in the at least one of the plurality of processor modules based on the apparatus information, and to transmit, to the external managing server, the apparatus information about the at least one of the plurality of processor modules for which the abnormality has been sensed.

The microserver may further include a collector configured to collect additional information that includes at least one of fan state information, power information, and network information of the microserver, and the module manager may be configured to combine the additional information and the apparatus information, and to provide the Intelligent Platform Management Interface service with respect to the at least one of the plurality of processor modules.

The module manager may be configured to virtualize the Intelligent Platform Management Interface service with respect to the at least one of the plurality of processor modules and to provide the Intelligent Platform Management Interface service in a virtualized form for the external managing server.

The module manager may be configured to virtualize the Intelligent Platform Management Interface service with respect to the at least one of the plurality of processor modules using at least one of a Full Virtualization method, a Para-Virtualization method, and an Application Virtualization method.

The apparatus information may be at least one of information about a central processing unit, operation information of the processor modules, and state information of the processor modules.

The microserver may further include a common interface bus configured to transceive data and a control command inside the microserver, and the common interface bus may be at least one interface bus of an Inter-Integrated Circuit interface, a Peripheral Component Interconnect Express interface, and a System Management Bus interface.

The module manager may be configured to collect the apparatus information about the at least one of the plurality of processor modules using the Inter-Integrated Circuit interface.

At least one of the plurality of processor modules may include a central processing unit configured to perform control operations, a module controller configured to control an operation of the central processing unit, and a collector configured to collect the apparatus information about the at least one of the processor modules and to provide the apparatus information to the module manager.

The collector may be configured to at least one of proceed with a recovery of the at least one of the plurality of processor modules under a control of the module manager and upgrade a firmware of the module controller.

The microserver may further include a baseboard where the communicator and module manager are mounted and that includes a plurality of slots configured to be connected to the plurality of processor modules, and the plurality of processor modules may be configured to be at least one of attached to and detached from the plurality of slots.

The microserver may include an input/output device including at least one input/output card configured to transceive data from an outside, and a switch configured to selectively connect the input/output device and the plurality of processor modules, and the switch may comprise a Peripheral Component Interconnect Express switch circuit, and may be configured to selectively adjust a connection between the plurality of processor modules and the at least one input/output card.

The foregoing and/or other features and utilities of the present invention also provide a processor module mounted on a baseboard of a microserver, the processor module including a central processing unit configured to perform control operations, a module controller configured to control the processor module, and a collector configured to collect apparatus information about the processor module and to transmit the apparatus information to the microserver so that an Intelligent Platform Management Interface service with respect to the processor module is provided to a managing server.

The collector may be configured to at least one of proceed with a recovery of the processor module under a control of the microserver and upgrade a firmware of the module controller.

The foregoing and/or other features and utilities of the present invention also provide a method of controlling a plurality of processor modules in a microserver, the method including collecting, in a module manager of the microserver, apparatus information about at least one of the plurality of processors, and providing an Intelligent Platform Management Interface service with respect to the at least one of the plurality of processor modules using apparatus information.

The providing the Intelligent Platform Management Interface service may virtualize the Intelligent Platform Management Interface service with respect to the at least one of the plurality of processor modules and may provide the Intelligent Platform Management Interface service in a virtualized form to an external managing server.

The providing the Intelligent Platform Management Interface service may virtualize the Intelligent Platform Management Interface service with respect to at least one of the plurality of processor modules using at least one of a Full Virtualization method, a Para Virtualization method, and an Application Virtualization method. The foregoing and/or other features and utilities of the present invention also provide a non-transitory computer-readable recording medium containing instructions which, when executed by an electronic processing element, cause the electronic processing element to perform a method of controlling a plurality of processor modules in a microserver, the method including collecting, in a module manager of the microserver, apparatus information about at least one of the plurality of processors, and providing an Intelligent Platform Management Interface service with respect to the at least one of the plurality of processor modules using apparatus information.

The foregoing and/or other features and utilities of the present invention also provide a module manager of a microserver that includes a memory storing computer-readable codes for a hypervisor, the hypervisor configured to produce an emulation of a baseboard management controller of an Intelligent Platform Management Interface for the microserver, and a central processing unit coupled to the memory and configured to execute the hypervisor.

The module manager may be mounted on a baseboard of the microserver.

The hypervisor may be configured to control an approaching method of a guest operating system.

The hypervisor may be configured so that a guest operating system controls the emulation of the baseboard management controller.

The hypervisor may be configured to control the emulation of the baseboard management controller.

The hypervisor may be a Xen hypervisor.

The emulation may be configured to process information about a processor module of the microserver stored within the processor module.

The emulation may be configured to process information about a processor module of the microserver stored outside of the processor module.

The foregoing and/or other features and utilities of the present invention also provide a non-transitory computer-readable recording medium containing instructions which, when executed by an electronic processing element, cause the electronic processing element to produce an emulation of a baseboard management controller of an Intelligent Platform Management Interface for a microserver.

These and/or other features and utilities of the present invention will become apparent and more readily appreciated from the following description of the embodiments, taken in conjunction with the accompanying drawings of which:
FIG. 1 is a block diagram schematically illustrating a configuration of a microserver according to an embodiment of the present invention;
FIG. 2 is a block diagram illustrating a configuration of a microserver according to an embodiment of the present invention;
FIG. 3 is a block diagram illustrating a configuration of a microserver according to an embodiment of the present invention;
FIG. 4 is a block diagram schematically illustrating a configuration of a processor module according to an embodiment of the present invention;
FIG. 5 is a block diagram illustrating a configuration of a processor module according to an embodiment of the present invention;
FIG. 6 is a block diagram illustrating a conventional Baseboard Management Controller (BMC) that provides an Intelligent Platform Management Interface (IPMI) service;
FIGS. 7 and 8 are block diagrams illustrating a structure of a microserver, according to an embodiment of the present invention, to provide the IPMI service;
FIG. 9 is a view illustrating a structure of a module manager according to an embodiment of the present invention;
FIG. 10 is a view illustrating a structure of a module manager according to an embodiment of the present invention;
FIG. 11 is a view illustrating a structure of a module manager according to an embodiment of the present invention;
FIG. 12 is a flowchart illustrating a method of controlling a processor module according to an embodiment of the present invention;
FIG. 13 is a flowchart illustrating an operation of providing an IPMI service illustrated in FIG. 12; and
FIG. 14 is a flowchart illustrating an operation of a processor module according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention while referring to the figures.

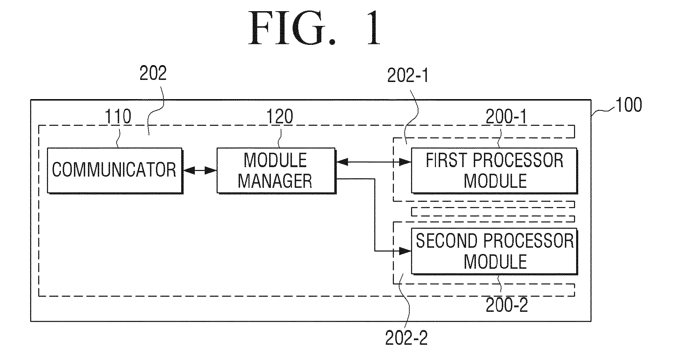

FIG. 1 is a block diagram schematically illustrating a configuration of a microserver 100 according to an embodiment of the present invention.

With reference to FIG. 1, the microserver 100, according to an embodiment of the present invention, includes a communicator 110, a module manager 120, and a plurality of processor modules 200. The communicator 110 and/or the module manager 120 may be mounted on a baseboard 202. The baseboard 202 may include a plurality of slots 202-1 and 202-2 configured to be connected to the plurality of processor modules 200-1 and 200-2. The plurality of processor modules 200-1 and 200-2 may be attached to and/or detached from the plurality of slots 202-1 and 202-2.

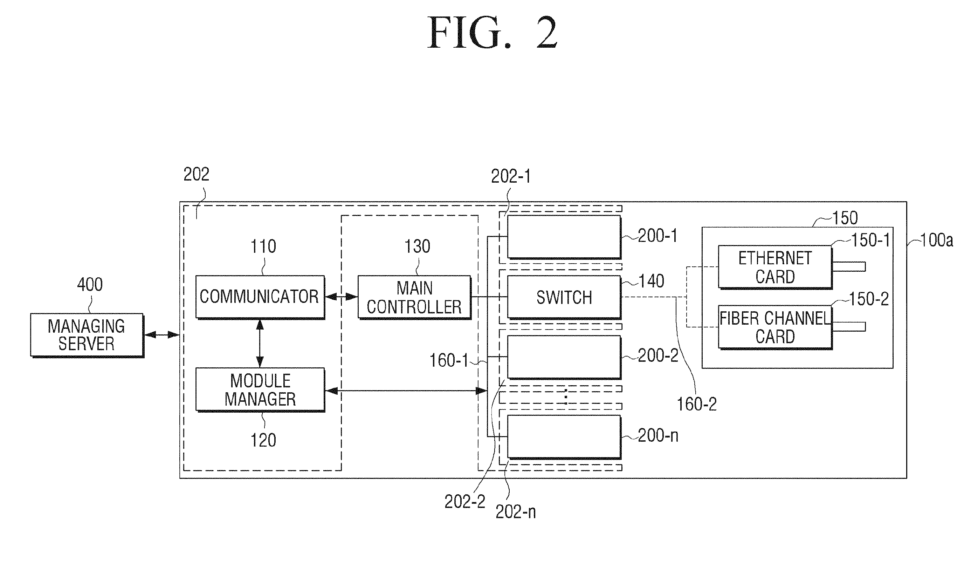

The communicator 110 may perform communication with a managing server 400 (see FIG. 2). For example, the communicator 110 may include a network controller (not illustrated) and a local area network (LAN) port (not illustrated), and may enable the module manager 120 to perform communication with the managing server 400. For example, the communicator 110 may perform communication with the managing server 400 through a network channel for server management out of band (OOB) (not illustrated) separated from the network channel that performs services of the microserver 100 (not illustrated). Although in an embodiment of the present invention the communicator 110 may perform communication with the managing server 400 through a wired LAN port, the communicator 110 may also be embodied in a format of performing communication with the managing server 400 that uses other wired communication methods other than the LAN method and also wireless communication methods.

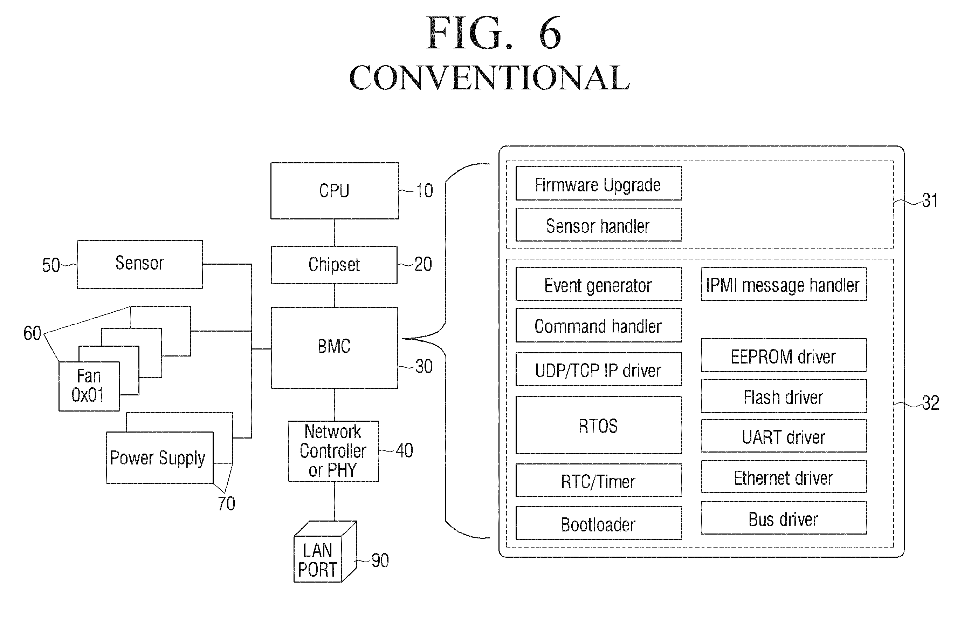

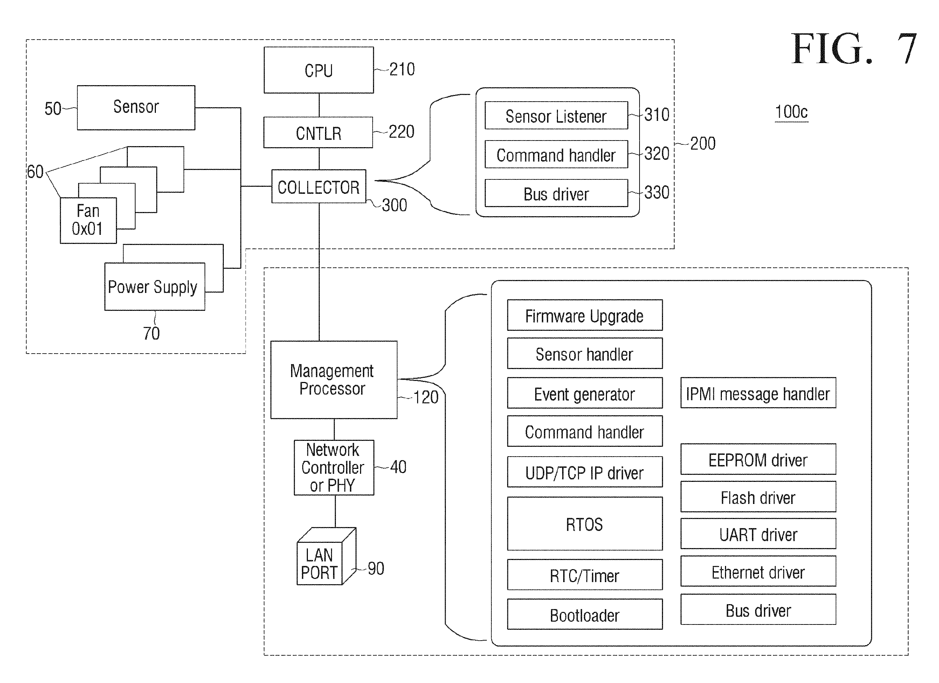

The module manager 120 may be, for example, a published Baseboard Management Controller (BMC). For example, the BMC may be a microprocessor (not illustrated) mounted onto a server that provides an Intelligent Platform Management Interface (IPMI) service, and among the functions provided by a conventional BMC, in an embodiment, the functions that may be published are published, and may be processed by the microserver 100. This is explained below in more detail with reference to FIGS. 6 and 7.

For example, the module manager 120 may collect apparatus information of each of the plurality of processor modules 200. For example, in order to collect the apparatus information of each of the plurality of processor modules 200, the module manager 120 may control a switch 140 (see FIG. 2) to transmit a request for transmission of apparatus information to each processor module 200 and collect the apparatus information from each processor module 200.

For example, the apparatus information may include information about the central processing unit (CPU) mounted on the processor module 200 (for example, the type of the CPU, the number of operation clocks, etc.) and operation information of the processor module 200 (for example, whether or not it is in an an operating mode, whether or not power is supplied, process occupation rates, etc.), state information of the processor module 200 (for example, information collected from a sensor (not illustrated)), and information provided from the IPMI other than the information described above.

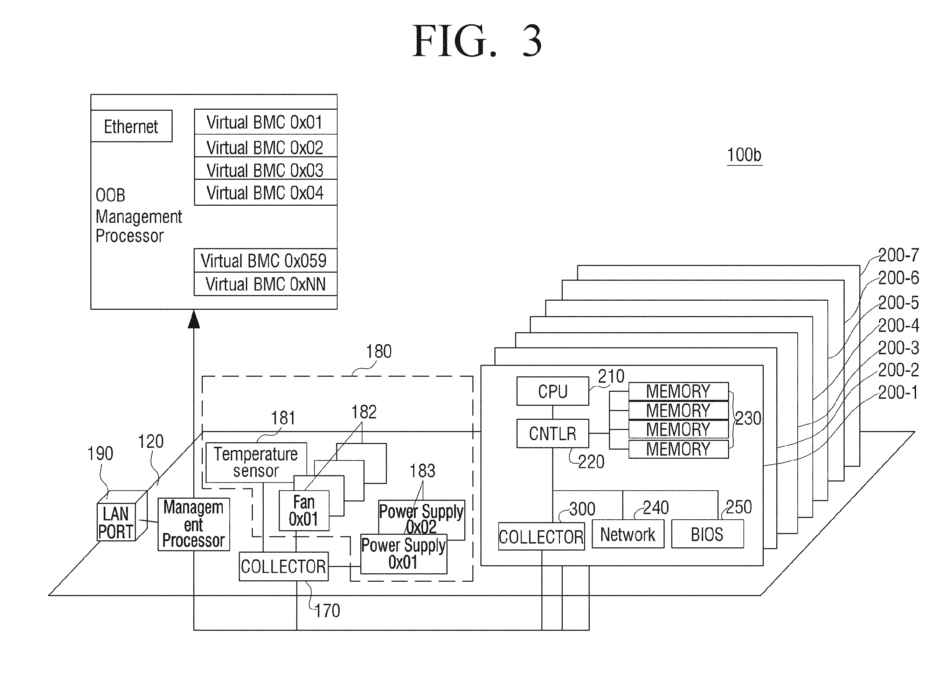

The microserver 100, according to an embodiment of the present invention, may publish a network, a power, a fan, etc. through the baseboard 202, and thus the module manager 120 may collect fan state information, power information, and network information through a collector 170 (see FIG. 3) (or a slave BMC) mounted on the baseboard 202.

In addition, the module manager 120 may provide an IPMI service with respect to each of the plurality of processor modules 200 using the collected apparatus information of the plurality of processor modules 200. For example, the module manager 120 may virtualize an IPMI service on the plurality of processor modules 200 based on the apparatus information collected from each of the plurality of processor modules 200 and based on the information collected through the collector 170 (see FIG. 3) mounted on the baseboard 202, and may provide the virtualized service to the managing server 400 (see FIG. 2). In this case, the managing server 400 may display the state of the microserver 100 to a manager or a user that uses the state information of the processor module 200, and may select an appropriate processor module 200 among the various processor modules 200 and may perform resource allocation.

For example, the IPMI may be an open type standard hardware management interface standard that defines the specific method in which an embedded managing subordinate system may perform communication. The IPMI may perform monitoring, logging, recovery, inventory, and hardware control with respect to the processor modules 200, and in an embodiment, such an IPMI service may not be performed in a microprocessor (not illustrated) mounted on a processor module 200, but may be virtualized and may be provided in a module manager 120 mounted on the baseboard 202.

For example, monitoring may refer to watching whether or not there is any abnormal operation in each processor module 200, while logging may refer to recording various items of information during operation in order to record and/or store an operation state of the system or to examine user behavior, to analyze system operation, etc. Recovery may refer to recovering when a processor module 200 breaks down or shows an abnormal operation, and inventory may refer to listing apparatus information of a processor module 200.

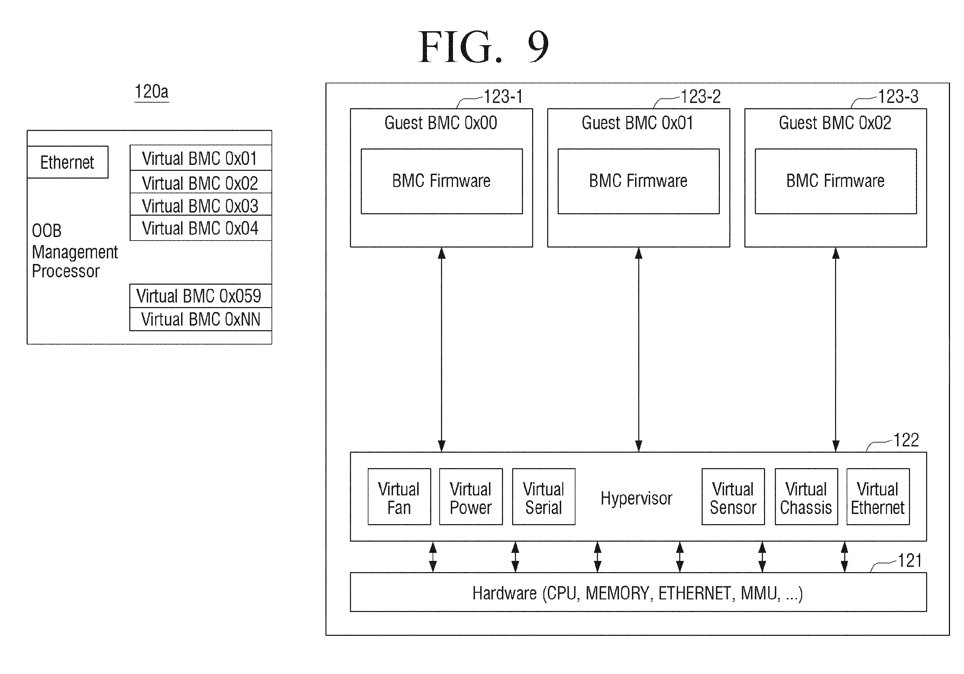

The module manager 120 may be embodied using, for example, any virtualization method of a full virtualization method, a para-virtualization method, and an application Virtualization method in order to virtualize each IPMI service of the plurality of processor modules 200. Configuration of the module manager 120 according to each virtualization method is explained below with reference to FIGS. 9 to 11.

By these virtualization methods, the module manager 120 may be virtualized as if a processor module 200 that corresponds to the collected apparatus information transmits the collected apparatus information to the managing server 400 (see FIG. 2), and when control information about a specific processor module 200 is received from the managing server 400, the module manager 120 may perform hardware control that corresponds to the control information about the specific processor module. In addition, the module manager 120 may sense whether or not there is anything abnormal in each of the plurality of processor modules 200 based on the collected apparatus information, may transmit information about the processor module 200 that has an abnormality that has been sensed to the managing server 400, and may perform hardware control for the processor module 200 that has the abnormality that has been sensed.

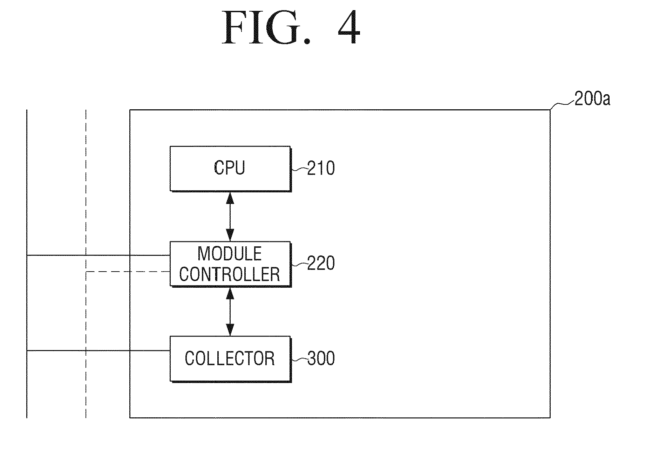

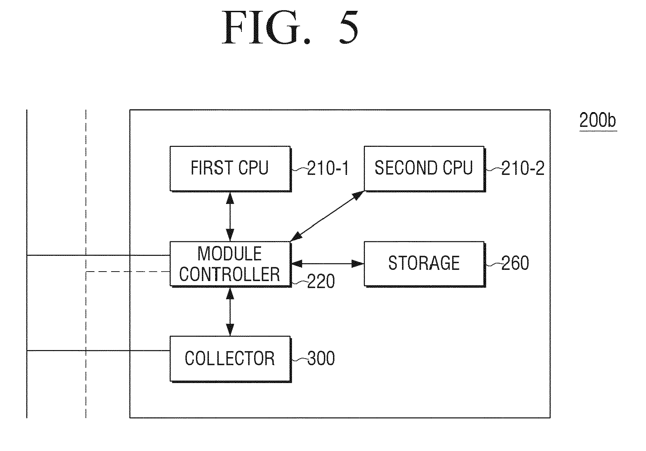

The processor module 200 may be a module embedded with core elements of a server such as, for example, a CPU, a memory device, an operating system, etc., and which may be provided with various functions such as, for example, power, input/output, ancillary device functions, and various control functions to perform the functions of a server. Specific configurations and operations of the processor module 200 are explained in detail below with reference to FIGS. 4 and 5.

The microserver 100, according to an embodiment, may publish the IPMI service which used to be processed in a conventional processor module in the module manager 120 mounted on the microserver 100 and may provide the published IPMI service, and thus there may be no need to have a high functioning BMC chip in each processor module 200. In addition, since there may be no need for a BMC chip, there may also be no need to provide a network controller (not illustrated) and LAN port (not illustrated), which would otherwise need to be disposed together with a BMC chip in the processor module, and thus the size of the area of the processor module 200 may be smaller, which may reduce complexity of design and cost.

Although only two processor modules 200 mounted on the microserver 100 are illustrated in FIG. 1, the present invention allows three or more processor modules 200 to be mounted on the microserver 100 according to various embodiments.

Additionally, in FIG. 1 it is illustrated that the communicator 110 and the module manager 120 are embodied separately, but the present invention allows the functions of the module manager 120 and the communicator 110 to be embodied in a single configuration.

In addition, in FIG. 1 it is illustrated that only the communicator 110, the module manager 120, and the processor module 200 are provided in the microserver 100, but other configurative elements may also be provided besides these, which is explained in more detail below with reference to FIG. 2.

FIG. 2 is a block diagram illustrating a configuration of a microserver 100a according to an embodiment of the present invention.

With reference to FIG. 2, the microserver 100a, according to an embodiment of the present invention, includes the communicator 110, the module manager 120, a main controller 130, a switch 140, an input/output (I/O) device 150, a common interface bus, and the plurality of processor modules 200, shown as 200-1, 200-2 ... 200-n. Although not illustrated, the communicator 110, the module manager 120, the switch 140, the I/O device 150, and the common interface bus may be formed on the baseboard 202, and the plurality of processor modules 200 may be attached or detached through the plurality of slots 202-1, 202-2, ... , 202-n formed on the baseboard 202. The communicator 110 and/or the module manager 120 may be mounted on the baseboard 202.

The configuration of the communicator 110, the module manager 120, and the plurality of processor modules 200 is such that they may perform equivalent functions as in the configuration of FIG. 1, and thus repeated explanation is omitted.

The main controller 130 may control each configuration of the microserver 100a. For example, the main controller 130 may control the switch 140 to transmit data transmitted through the I/O device 150 to each processor module 200 using the common interface bus 160.

In addition, the main controller 130 may control each processor module 200 mounted on the microserver 100a to configure a specified system such as, for example, a web server, a file transfer protocol (FTP) server, a main server, a database server, etc. For example, when used as a web server accessed by a lot of users at the same time, the main controller 130 may control the processor module 200 so that more processor modules 200 may be used, or may enable a web casing processor (not illustrated) connected via high speed Internet only to perform the corresponding processing.

The switch 140 may selectively connect the I/O device 150 and the plurality of processor modules 200. For example, the switch 140 may selectively connect one of the plurality of processor modules 200 to transmit the data received from the I/O device 150.

In addition, the switch 140 may include, for example, a Peripheral Component Interconnect Express (PCI Express (or PCIe)) switch circuit (not illustrated) (or a Multi-Root Aware (MRA) PCIe switch (not illustrated)), and may selectively adjust the connection relationship between the plurality of processor modules 200 and at least one I/O card (e.g., an Ethernet card 150-1, a fiber channel card 150-2, etc.).

Such a switch 140 may be embodied through an I/O virtualization technology. For example, the I/O virtualization technology may refer to a technology that uses one I/O card in numerous processor modules 200.

Since the switch 140 may adjust the connecting structure between the processor module 200 and the I/O device 150, it may be possible to adjust the connecting structure of the processor module 200 without changing the physical location of the I/O device 150 and the processor module 200.

The I/O device 150 may include, for example, at least one I/O card (e.g., the Ethernet card 150-1, the fiber channel card 150-2, etc.), and may transmit and/or receive data to and/or from the microserver 100. For example, the I/O card may be embodied in the Ethernet card 150-1, the fiber channel card 150-2, etc.

In addition, the I/O device 150 may transmit and/or receive data to and/or from an external apparatus (not illustrated), an external network (not illustrated), etc. For example, the data may be transmitted and/or received to and/or from the processor module 200 through a PCI Express switch, and connection with the processor module 200 may be controlled by the switch 140.

The common interface bus may be a contact apparatus that connects each configuration of the microserver 100a. For example, the common interface bus may perform a two-way or a half-duplex communication under a control of the main controller 130. Such a common interface bus may include, for example, a first interface bus 160-1, which connects to a control command signal, and a second interface bus 160-2, which connects to a data signal.

The common interface bus may support, for example, at least one of an Inter-Integrated Circuit (I²C) interface, a PCI Express interface, and a System Management Bus (SMBus) interface. Accordingly, the first interface bus 160-1, which connects to a control command signal, may be, for example, an I²C interface bus or a SMBus interface bus, and the second interface bus 160-2, which connects to a data signal, may be, for example, a PCI Express interface bus. In addition, communication between the module manager 120 and the processor module 200 may be performed through the first interface bus that supports the I²C interface or the SMBus interface.

For example, the I²C interface is a bus standard developed for communication between a CPU and a peripheral low speed apparatus, and uses two strands of lines, and thus is called a Two Wire Interface (TWI). An I²C interface bus uses a synchronous communication method, and is made of clock signals and data signals, and thus two way communication is possible with a master apparatus regardless of the number of the slave apparatuses. In addition, two or more master apparatuses may be disposed in one bus, and the slave apparatuses may be added/removed even when the I²C interface bus is in operation. Accordingly, the main controller 130 and the module manager 120 may operate as the master apparatus, and the plurality of processor modules 200 may operate as the slave apparatus.

In addition, the PCI Express interface is a local bus standard that has a reformed serial structure for high speed input/output between apparatuses and which maintains software compatibility with a conventional PCI parallel interface bus. The PCI Express interface is suitable for large volume data processing. In this regard, in an embodiment of the present invention, data may be transmitted to each processor module 200 through the PCI Express interface bus of the common interface bus 160-2 under a control of the main controller 130.

In addition, the SMBus interface is a simple two line bus used to communicate with low speed apparatuses on a mother board. It is an interface that has its basis on I²C serial bus protocol and transmits clocks, data, and commands.

For example, the data received from the I/O device 150 may be transmitted to the processor module 200 selected by the switch 140 through the PCI Express interface. For example, the switch 140 may be controlled by the main controller 130 to select which module 200 to transmit the data.

The processor module 200 may be connected to the main controller 130 through the common interface bus 160. For example, the processor module 200 may include a module controller 220 (see FIG. 4) configured to relay a connection between the common interface bus and the interface that the CPU mounted on the processor module 200 uses.

In addition, the processor module 200 may be connected to the module manager 120 through the common interface bus 160.

The explanation above included the basic configurative elements of the microserver 100a. Below, operation of the microserver 100a is explained based on only the configurative elements that provide the IPMI service.

FIG. 3 is a block diagram illustrating a configuration of a microserver 100b according to an embodiment of the present invention.

With reference to FIG. 3, the microserver 100b, according to an embodiment of the present invention, includes the module manager 120, the collector 170, sensors 180, and the plurality of processor modules 200.

The module manager 120 may perform communication with the managing server 400 (see FIG. 2) through a LAN port 190 (or an 8 position 8 contact (8P8C) connector (also known as an RJ45 connector)).

In addition, the module manager 120 may collect information through the plurality of processor modules 200 and the collector 170, and may provide IPMI service with respect to each of the plurality of processor modules 200 to the managing server 400 based on the collected information. Specific configuration and operation of the module manager 120 is explained below with reference to FIGS. 9 to 11.

The collector 170 may collect, for example, information about the network, power, and fans from the sensors 180 mounted on the baseboard 202 (see FIGS. 1 and 2). In addition, the collector 170 may transmit the collected information to the module manager 120. Such a collector 170 may be embodied as chip configured to collect information from the sensor 180 or to perform simple controls, or may be included in the same chip as a collector 300 mounted on the processor module 200 to be explained below.

The sensors 180 may include, for example, a network sensor (not illustrated), a power sensor 183, a fan sensor, etc. and may produce information on the operational state of the network, power, fan, etc. and information about whether or not there is any abnormality in a control of the collector 170, and may provide the information to the collector 170.

Each processor module 200 may include, for example, a CPU 210, a module controller 220, a volatile memory 230, a network hardware 240, a Basic Input/Output System (BIOS) 250, and the collector 300 (or a slave BMC).

The CPU 210 may be a central processing unit of the processor modules 200, configured to decode a control command and to execute an arithmetic and/or a logic operation or a data processing operation. A more detailed explanation about the CPU 210 is provided below with reference to FIG. 4.

The module controller 220 may be a configuration that controls each configurative element of the processor module 200. The module controller 220 may control each configurative element of the processor module 220 based on the information stored in the BIOS 250. In addition, the module controller 220 may process the data and control information transmitted from the microserver 100 using the CPU 210. Specific configuration of the module controller 220 is explained below with reference to FIG. 4. Such a module controller 220 may be, for example, a micom chipset.

The volatile memory 230 may be a memory that stores information. For example, the volatile memory 230 may be a volatile memory that requires a continuous power supply, which may be used as a working memory that increases a program or processing speed when the operating system is operating. The volatile memory 230 may be, for example, a Dynamic Random Access Memory (DRAM), a Static Random Access Memory (SRAM), etc. Although only the volatile memory 230, provided in the processor module 200, is illustrated in FIG. 3, the present invention also allows a nonvolatile memory 260 (see FIG. 5) such as, for example, a hard disk drive (HDD), a solid-state drive (SDD), a flash memory, etc. to be provided.

The network hardware 240 may receive a data and control command from the microserver 100b. Specifically, the network hardware 240 may be connected to the common interface bus 160, may transmit and/or receive control command signals and/or information requests of the module manager 120 through the I/O device 150 through the I²C interface bus, and may transmit and/or receive data signals through the I/O device 150 through the PCI Express interface bus.

The BIOS 250 may be a storage medium where information needed to operate the module controller 220 and information about the configuration of the processor module 200 may be stored.

The collector 300 may collect the apparatus information of the processor module 200 and may transmit the collected apparatus information to the module manager 120, may proceed with recovery of the processor module 200 under a control of the module manager 120, or may upgrade a firmware of the BIOS 250 of the module controller 220.

FIGS. 4 and 5 are block diagrams illustrating configurations of the processor module 200a or 200b according to embodiments of the present invention.

With reference to FIGS. 4 and 5, the processor module 200a or 200b may include the CPU 210, the module controller 220, and the collector 300 (or a slave BMC). For example, the processor module 200a or 200b may be a large scale modulized server, which may be mounted onto the microserver 100, 100a, or 100b (see FIGS. 1-3). The processor module 200 may include one or more CPUs, storage, operating systems, etc. as core elements of the server. Such a processor module 200a or 200b may be mounted on the baseboard 202 (see FIGS. 1 and 2) of the microserver 100, 100a, or 100b to receive support for various power, input/output, and control functions from the microserver 100, 100a, or 100b so as to perform the functions as a server.

The CPU 210 may be a central processing unit of the processor modules 200a or 200b. The CPU 210 may decode control commands, may execute arithmetic and logic operations, and may perform data processing. The CPU 210 may have a Bus Interface Unit (BIU), and may perform communication with an external component (not illustrated). For example, the CPU 210 may be an Intel R-type CPU, an ARM RO type CPU, or an ARM type CPU.

The CPU 210 may have a different architecture depending on the manufacturer. An architecture is a concept that may include the basic structure, design method, and manufacturing process. An architecture may be determined by the clock speed, the number of cores, the cache capacity, the BIU, etc. Because an interface standard may be defined according to the architecture of the CPU of its manufacturer, it may not be possible to use CPUs of other manufacturers.

For example, as illustrated in FIG. 5, a plurality of CPUs 210-1, 210-2 may be mounted on one processor module 200b. Because the interface in the processor module 200b must be identical, the plurality of CPUs 210-1, 210-2 may need to be the same type of CPU designed by the same manufacturer. In this case, by one module controller 220, each of the plurality of CPUs 210-1, 210-2 may each execute a separate operating system or may be operated on one operating system.

The feature that CPUs of other manufacturers may not be used applies only to within each processor module 200. Each of the processor modules 200-1, 200-2, etc. (see FIG. 3) may have different types of CPUs. For example, the first processor module 200-1 may have an Intel R-type CPU, and the second processor module 200-2 may have an ARM type CPU.

The module controller 220 may be connected to the common interface bus (see FIG. 2) and may relay a connection between the interface that the CPU 210 (see FIG. 3) of the processor module 200 uses. For example, the processor module 200 may be designed to have an interface that corresponds to the CPU 210 that is mounted on the processor module 200. In order to communicate with the common interface bus 160, the module controller 220 (see FIG. 2) may convert control commands and data according to the interface protocol that corresponds to the CPU 210 that is mounted on the module controller 220.

In addition, the module controller 220 may be connected to the BIU (not illustrated) of the CPU 210 and may transmit and/or receive control commands and data to and from the BIU. For example, in the case where the type of CPU mounted on the processor module 200a or 200b is an Intel R-type CPU, the module controller 220 may receive a control command transmitted from the main controller 130 (see FIG. 2) of the microserver 100, 100a, or 100b, may convert the received control command into an interface that has a standard that corresponds to the Intel R-type CPU, and may provide the converted interface to the CPU 210 and each configurative element inside the processor module 200a or 200b.

In addition, the module controller 220 may have a firmware used to control the CPU 210 mounted on the processor module 200a or 200b to control each configuration of the processor module 200a or 200b. The firmware provided in such a module controller 220 may be updated by the collector 300 as explained below.

The collector 300 may be a configurative element in a case where the published function in the module manager 120 (see FIGS. 1-3) of a conventional BMC has been omitted. The collector 300 may collect the apparatus information of the processor module 200a or 200b and may transmit the collected apparatus information to the module manager 120, may proceed to recover the processor module 200 under a control of the module manager 120, or may upgrade the firmware of the module controller 220.

FIG. 6 is a block diagram illustrating a conventional Baseboard Management Controller (BMC) 30 that provides the Intelligent Platform Management Interface (IPMI) service.

With reference to FIG. 6, in order to provide the IPMI service through an OOB network channel, a conventional processor module has the BMC chip 30, an additional network controller 40, an 8P8C (RJ45) Ethernet connector 90, a CPU 10, and a chipset 20.

Herein, the BMC 30 is a microprocessor configured to receive a command in an managing console (not illustrated) through the IPMI, and read a value of the sensors 50, 60, or manipulate a power 70, or inform an event through a network when a problem occurs. Because an event and manipulating command must be transmitted through the network, the software structure has various drivers that include an additional operating system (OS) and a Transmission Control Protocol/Internet Protocol (TCP/IP) stack. In addition, when necessary, an additional storage (for example, a Read-Only Memory (ROM) or a flash memory) is used to store BMC firmware.

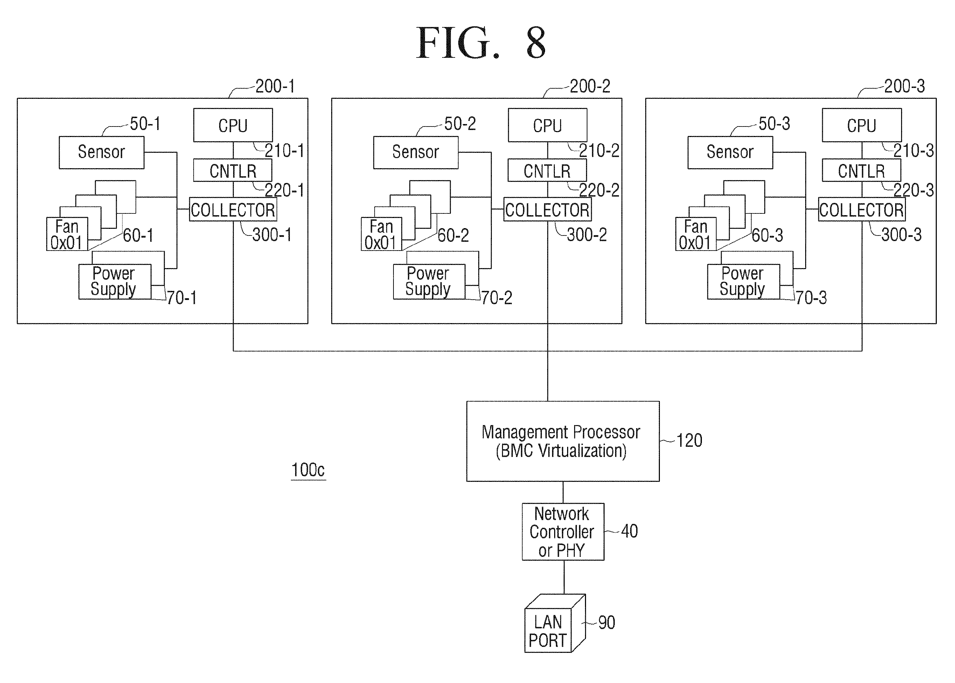

However, in the microserver 100, 100a, or 100b, fan management and power management is unnecessary. Therefore, in an embodiment of the present invention, only the module manager 120 (see FIGS. 1-3), which may perform a sensor measurement function that must be performed in the processor module 200, and a command processing function, which may control the bus driver and the processor module 200, 200a, or 200b to perform communication with the microserver 100, 100a, or 100b, may be provided in the processor module 200, 200a, or 200b, and the other functions that are provided in a conventional BMC may be published and processed in the module manager 120. This embodiment is explained in more detail with reference to FIGS. 7 and 8.

FIGS. 7 and 8 are block diagrams illustrating a structure of a microserver 100c, according to an embodiment of the present invention, to provide the IPMI service.

With reference to FIGS. 7 and 8, in each of the processor modules 200-1, 200-2, 200-3, the CPU 210, the module controller 220, and the collector 300 (or a slave BMC) with only basic functions (e.g., a sensor listener 310, a command handler 320, and a bus driver 330) may be disposed.

Operations of the CPU 210 and module controller 220 are explained with reference to FIG. 4, and thus a repeated explanation is omitted.

The collector 300 may have only the function of reading information of the sensor 50 disposed in the processor module 200 (e.g., the sensor listener 310), the function of processing simple processes (e.g., the command handler 320 configured, for example, to recover the processor module 200, etc.), and the function of communicating with the module manager 120 (e.g., the bus driver 330). The collector 300 may not have numerous functions as compared with the BMC 30 configuration of FIG. 6, and thus the collector 300 may be embodied in a relatively small micom. In addition, since the collector 300 may perform communication with the module manager 120 through the I²C interface (not illustrated) of the processor module 200, there may be no need to dispose the network controller 40 or physical layer (PHY) chip and the LAN connector 90 in the processor module 200.

In addition, since the microserver 100c may perform fan management and power management, as compared with the BMC 30 illustrated in FIG. 6, the collector 300 may not collect information from the fan 60 or perform management of the power supply 70. Such fan management and power management may be performed through the collector 170 (see FIG. 3) disposed on the baseboard 202 (see FIGS. 1 and 2).

The module manager 120 may be a published Baseboard Management Controller (BMC). For example, the module manager 120 may produce as many a number of virtual BMCs as may be the number of the processor modules 200 installed in the microserver 100, and may collect the apparatus information of each of the plurality of processor modules 200 through the collector 300. For example, the apparatus information may include information about the CPU 210 mounted on the processor module 200 (e.g., whether or not there is a mode, whether or not power is supplied, a process occupation rate, etc.) and information provided in the IPMI in addition to other information as explained above.

In addition, the module manager 120 may collect fan state information, power information and network information through the collector 170 (see FIG. 3) mounted on the baseboard 202 (see FIGS. 1 and 2).

In addition, the module manager 120 may virtualize the IPMI service with respect to the plurality of processor modules 200 based on the apparatus information collected from each of the plurality of processor modules 200 and information collected through the collector 170 (see FIG. 3) mounted on the baseboard 202, and may provide the virtualized IPMI service to the managing server (not illustrated).

Virtualization methods are explained in more detail below with reference to FIGS. 9 to 11.

In addition, the module manager 120 may perform communication with the external managing server 400 (see FIG. 2) through the communicator 110 (see FIGS. 1 and 2).

The microserver 100c, according to an embodiment of the present invention, publishes the IPMI service, which used to be processed in each conventional processor module, in the module manager 120 mounted on the microserver 100c and may provide the published IPMI service so that there may be no need to provide a highly functional BMC chip in each of the processor modules 200. In addition, since a BMC chip may not be necessary, there may also be no need for the network controller 40 or the LAN port 90, which conventionally are disposed together with the BMC chip to be provided in the processor module 200, which may reduce the size of the area of the processor module 200 and may reduce the complexity of design and cost.

Although it is illustrated in FIGS. 7 and 8 that the collector 300 (or a slave BMC) is disposed in each of the processor modules 200 in the microserver 100c, the present invention also allows some of the processor modules 200 to be embodied to include a conventional BMC. That is, the module manager 120 (see FIGS. 1-3), according to an embodiment of the present invention, may not only use a slave BMC, but may also be embodied to obtain information or to perform controlling through a conventional BMC.

In this case, the module manager 120, according to an embodiment of the present invention, may be embodied as a collector of a processor module 200 disposed inside the microserver 100c, or be embodied to obtain information or perform controlling of a collector (not illustrated) disposed in an external apparatus (not illustrated).

The microserver 100c, according to an embodiment of the present invention, may virtualize the functions of the BMC, which may be disposed in each processor module 200 and may operate therein, and may provide separate IPMI service in one processor 200. When as many virtualized BMCs as the number of the processor 200 are executed through an OOB network channel, the managing server 400 (see FIG. 2) may realize that there actually are numerous servers, may understand the power and state of an individual server selected, and may perform controlling thereof.

Such a virtualization of the IPMI service may be embodied, for example, in one of a full virtualization method, a paravirtualization method, and an application virtualization method. Below is an explanation about the full virtualization method with reference to FIG. 9.

FIG. 9 is a view illustrating a structure of a module manager 120a according to an embodiment of the present invention. For example, the embodiment illustrated in FIG. 9 may be a case where the module manager 120a is embodied using the full virtualization method.

With reference to FIG. 9, the module manager 120a may include hardware 121, a hypervisor 122, and an emulation 123.

The hardware 121 may be a hardware configuration connected with the communicator 110 (see FIGS. 1 and 2) and the plurality of processor modules 200 (see FIGS. 1-5, 7, and 8).

The hypervisor 121 may be software configured to virtualize the software of a conventional BMC. The hypervisor 121 may be a thin layer software that performs control approaching the methods of various different operating systems in various computer resources such as, for example, a processor or memory.

Using the hypervisor 122 may have an advantage of using the software that was used in a conventional BMC without additional processing. However, there may be a disadvantage in that there may be time spent to emulate the hardware and to develop the hypervisor, and in that the speed may not be fast due to the hardware emulation.

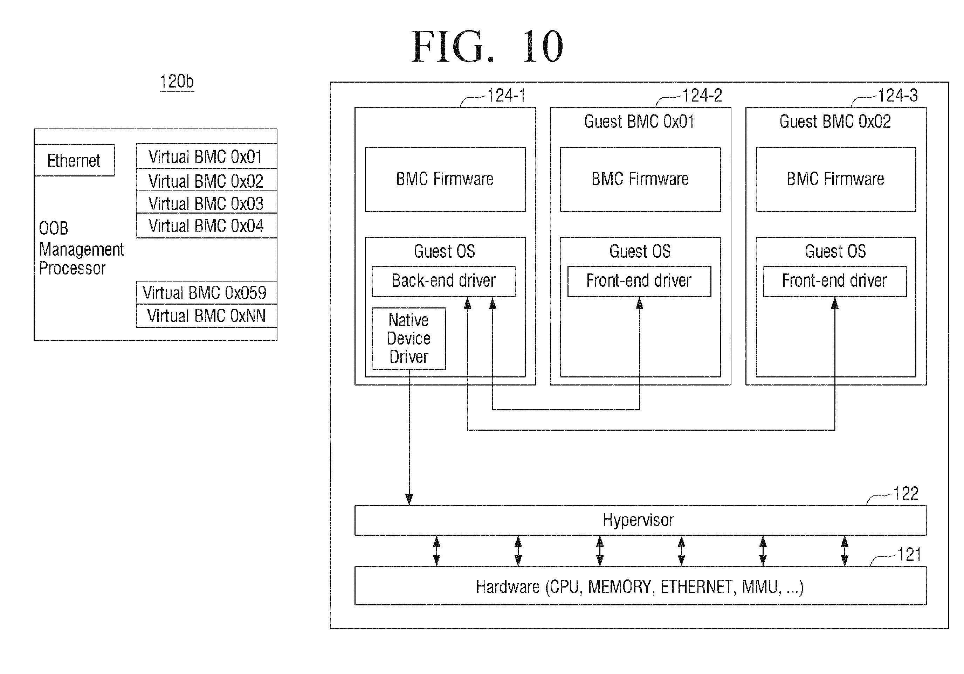

FIG. 10 is a view illustrating a structure of a module manager 120b according to an embodiment of the present invention. For example, the embodiment illustrated in FIG. 10 may be a case where the module manager 120b is embodied using the paravirtualization method. For example, the Para Virtualization method is a method of requesting a hypervisor to perform the control instead of a method of direct control by the guest operating system.

With reference to FIG. 10, the module manager 120b may include the hardware 121, the hypervisor 122 and an emulation 124 that may be physically connected to various configurative elements.

The hardware 121 may be a hardware configuration that is connected with the communicator 110 (see FIGS. 1 and 2) and the plurality of processor modules 200 (see FIGS. 1-5, 7, and 8).

The hypervisor 122 may be a thin layer software that controls the approaching methods of various different operating systems in various computer resources such as, for example, a processor or memory. For example, the hypervisor 122 may be a Xen hypervisor.

The emulation 124 may include an emulation 124-1 configured to process the information collected in the collector 170 (see FIG. 3) and emulations 124-2 and 124-3 configured to process information collected in the collector 300 (see FIGS. 3-5, 7, and 8) of the processor module 200. For example, the emulation 124 may have such a configuration so as to process the information collected through the collector 170 mounted on the baseboard 202 (see FIGS. 1 and 2) and the information collected through the collect 300 of the processor module 200 combined since the microserver 100 may publish and then may use the fan 182 or 60 and the power supply 183 or 70 (see FIGS. 3, 7, and 8).

The Para Virtualization method may be easier to embody than the vull virtualization method and an operating speed of the paravirtualization method may also be faster than the full virtualization method.

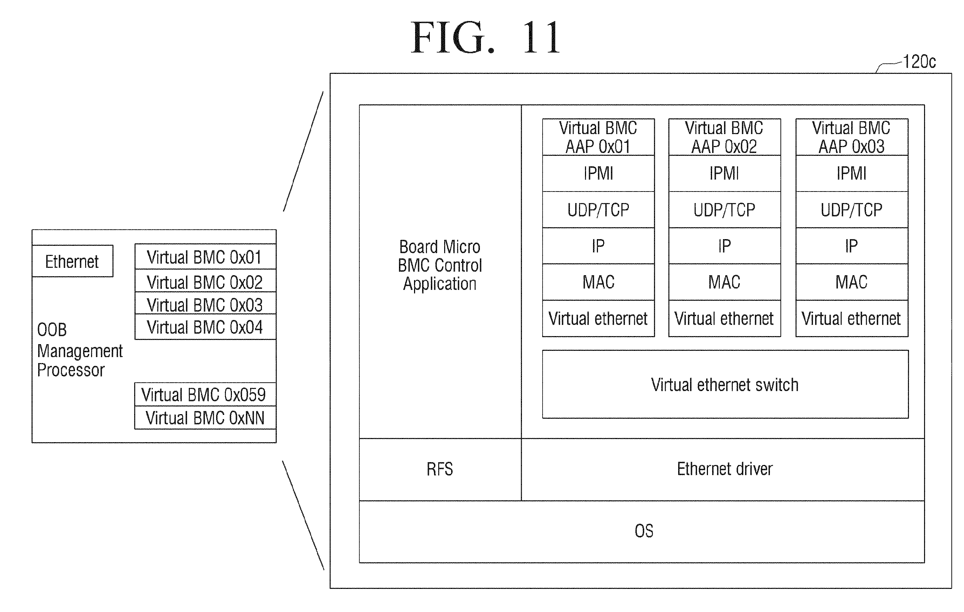

FIG. 11 is a view that illustrates a structure of a module manager 120c according to an embodiment of the present invention. For example, the embodiment illustrated in FIG. 11 may be a case where the module manager 120c is embodied using the application virtualization method.

FIG. 11 illustrates an embodiment that uses the application virtualization method simply by developing a BMC configured to provide IPMI services in an application format and connecting to an individual virtual LAN card. Compared with the full virtualization method and the paravirtualization method, an embodiment that uses the application virtualization method is relatively easy to implement and the software does not consume much memory space.

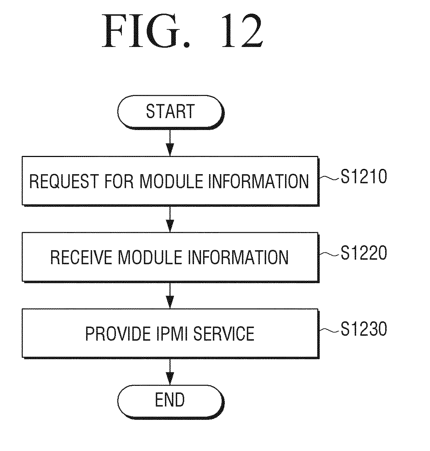

FIG. 12 is a flowchart that illustrates a method of controlling the processor module 200 according to an embodiment of the present invention.

With reference to FIG. 12, the module manager 120 (see FIGS. 1-3 and 7-10) may request apparatus information from the collector 300 (see FIGS. 3-5, 7, and 8) of each of the plurality of processor modules 200 (see FIGS. 1-5, 7, and 8) (S1210). For example, the apparatus information may include CPU information mounted on the processor module 200 (for example, the type of the CPU, the number of operation clocks, etc.) and operation information of the processor module 200 (for example, whether or not it is in an operating mode, whether or not power is supplied, process occupation rates, etc.), state information of the processor module 200 (for example, information collected from a sensor), and information provided from the IPMI other than the information described above.

In addition, in response to the above request, the module manager 120 may receive the apparatus information from each processor module 200 and may collect apparatus information about the plurality of processor modules 200 (S1220).

In addition, using the apparatus information about the plurality of processor modules 200 collected in the module manager 120, IPMI service with respect to each of the plurality of processor modules 200 may be provided for the managing server 120 (S1230). For example, the IPMI service with respect to each processor module may be virtualized using one of the full virtualization method, the paravirtualization method, and the application virtualization method, and the virtualized IPMI service may be provided to the managing server.

In addition, in response to the IPMI service, the collected apparatus information of the processor modules 200 may be transmitted to the managing server 400 (see FIG. 2) just as it may be transmitted from the corresponding processor module 200, and the function that corresponds to the control command of the managing server 400 may be performed in the module manager 120 by controlling the processor module 200.

The method of controlling the processor modules 200 described with reference to FIG. 12 may be provided after virtualizing conventional BMC functions, which may reduce the costs, the number of components, and the power consumption of the microserver 100 (see FIGS. 1-3, 7, and 8). The method illustrated in FIG. 12 may be executed in a microserver 100 that has a configuration illustrated in FIGS. 1 to 3, or in a microserver that has a configuration other than those illustrated in FIGS. 1 to 3.

In addition, the method of controlling the processor module 200, according to an embodiment of the present invention, may be embodied in a program that includes an algorithm which may be executed in a computer, and the program may be stored and provided in a non-transitory computer readable medium.

For example, a non-transitory computer readable medium may refer to a medium readable by an apparatus and which may store data semi-permanently rather than for a short time such as, for example, a register, a cache, a memory, etc. For example, the programs described above may be stored and may be provided in non-transitory computer readable medium such as, for example, a compact disc (CD), a digital video disc (DVD), a hard disk, a Blu-ray disk, a Universal Serial Bus (USB) flash drive, a memory card, a Read-only Memory (ROM), etc.

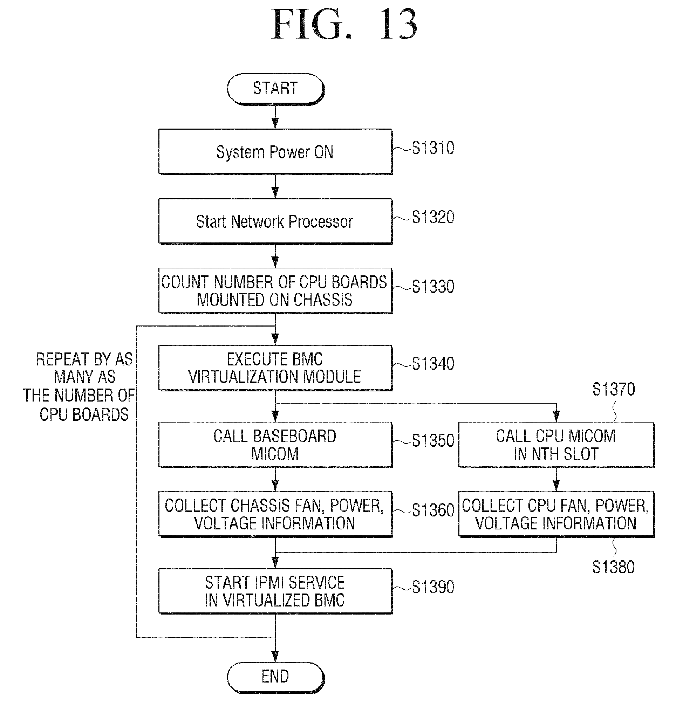

FIG. 13 is a flowchart that illustrates an operation of providing an IPMI service illustrated in FIG. 12.

With reference to FIG. 13, when the system of the microserver 100 (see FIGS. 1-3, 7, and 8) is turned on (S1310), a network processor may be initiated (S1320).

The number of processor modules 200 (see FIGS. 1-5, 7, and 8) mounted on the microserver 100 may be obtained (1330), and the BMC virtualization may be performed for as many as the obtained number of processor modules 200 mounted on the microserver 100 (S1340).

In addition, when the BMC virtualization is driven, the apparatus information of the processor module 200 that corresponds to the subject BMC may be called and obtained (S1370, S1380), and a request for the apparatus information may be made to the collector 170 (see FIG. 3) mounted on the baseboard 202 (see FIGS. 1 and 2) and the requested apparatus information may be obtained (S1350, S1360).

In addition, based on the collected information, the IPMI service with respect to the corresponding processor module may be provided by a virtualization method (S1390).

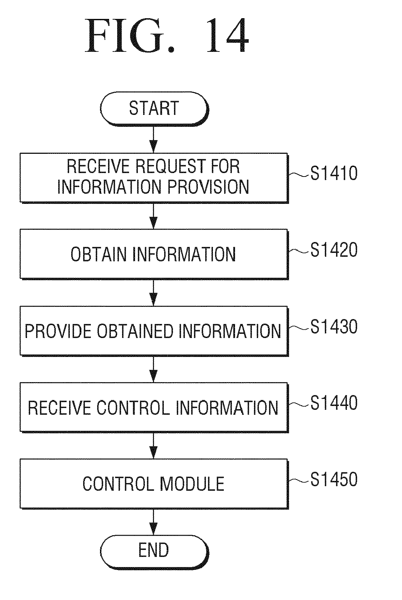

FIG. 14 is a flowchart that illustrates an operation of a processor module according to an embodiment of the present invention.

With reference to FIG. 14, the collector 300 (see FIGS. 3-5, 7, and 8) provided in the processor module 200 (see FIGS. 1-5, 7, and 8) may receive a request for apparatus information through the module manager 120 (see FIGS.1-3 and 7-10) (S1410).

In response to the request for apparatus information, a value may be obtained from a sensor 180 or 50 (see FIGS. 3, 7, and 8) (S1420), and the collected apparatus information may be transmitted to the module manager 120 (S1430).

In addition, when the control information (i.e., a control command) is received through the module manager 120, it may be possible to perform an operation (S1450) that corresponds to the received control information (S1440). For example, when a recovery command is received from the module manager 120, the collector 300 (see FIGS. 3-5, 7, and 8) may enable the processor module 200 to be rebooted.

As explained above, the processor module 200, according to an embodiment of the present invention, may not perform control operations itself but may perform operations under the control of the module manager 120, and thus a collector 300 that has a simple configuration may also perform an IPMI service. The control operations as illustrated in FIG. 14 may be carried out in the processor module 200 that has, for example, the configuration illustrated in FIG. 4, or in a processor module that has another configuration.

In addition, the method of controlling the processor module 200 may be embodied in a program that includes an algorithm which may be executed in a collector 300, or may be stored and provided in a non-transitory computer readable medium.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), compact disc ROM (CD-ROMs), magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present invention can be easily construed by programmers skilled in the art to which the present invention pertains.

Although a few embodiments of the present invention have been shown and described, it will be appreciated by those skilled in the art that changes may be made in these embodiments without departing from the invention, the scope of which is defined in the appended claims.

## Claims

1. A server system, comprising:
a plurality of processor modules;
a communicator configured to perform communication with an external managing server; and
a module manager configured to collect apparatus information about at least one of the plurality of processor modules, and to provide an Intelligent Platform Management Interface service with respect to the at least one of the plurality of processor modules for the external managing server.

2. The server system according to claim 1, wherein the Intelligent Platform Management Interface service, configured to perform at least one of monitoring, logging, recovery, inventory, and hardware control with respect to the processor modules.

3. The server system according to claim 1 or claim 2, wherein the module manager is configured to perform virtualization such that a processor module that corresponds to the apparatus information is configured to transmit the apparatus information to the external managing server.

4. The server system according to any one of the preceding claims, wherein when control information about a specific processor module is received from the external managing server, the module manager is configured to perform hardware control that corresponds to the control information about the specific processor module.

5. The server system according to any one of the preceding claims, wherein the module manager is configured to sense an abnormality in the at least one of the plurality of processor modules based on the apparatus information, and to transmit, to the external managing server, the apparatus information about the at least one of the plurality of processor modules for which the abnormality has been sensed.

6. The server system according to any one of the preceding claims, further comprising a collector configured to collect additional information that includes at least one of fan state information, power information, and network information of the server system,
wherein the module manager is configured to combine the additional information and the apparatus information, and to provide the Intelligent Platform Management Interface service with respect to the at least one of the plurality of processor modules.

7. The server system according to any one of the preceding claims, wherein the module manager is configured to virtualize the Intelligent Platform Management Interface service with respect to the at least one of the plurality of processor modules and to provide the Intelligent Platform Management Interface service in a virtualized form to the external managing server.

8. The server system according to claim 7, wherein the module manager is configured to virtualize the Intelligent Platform Management Interface service with respect to the at least one of the plurality of processor modules using at least one of a full virtualization method, a paravirtualization method, and an application virtualization method.

9. The server system according to any one of the preceding claims, wherein the apparatus information is at least one of information about a central processing unit, operation information of the processor modules, and state information of the processor modules.

10. The server system according to any one of the preceding claims, further comprising a common interface bus configured to transceive data and a control command inside the microserver,
wherein the common interface bus is at least one interface bus of an Inter-Integrated Circuit interface, a Peripheral Component Express interface, and a System Management Bus interface.

11. The server system according to claim 10, wherein the module manager is configured to collect the apparatus information about the at least one of the plurality of processor modules using the Inter-Integrated Circuit interface.

12. The server system according to any one of the preceding claims, the processor module comprising:
a central processing unit configured to perform control operations;
a module controller configured to control the processor module; and
a collector configured to collect apparatus information about the processor module and to transmit the apparatus information to the server system so that an Intelligent Platform Management Interface service with respect to the processor module is provided to a managing server.

13. The server system according to claim 12, wherein the collector is configured to at least one of proceed with a recovery of the processor module under a control of the server system and upgrade a firmware of the module controller.

14. A method of controlling a plurality of processor modules in a server system, the method comprising:
collecting, in a module manager of the server system, apparatus information about at least one of the plurality of processors; and
providing an Intelligent Platform Management Interface service with respect to the at least one of the plurality of processor modules using the apparatus information.

15. The method according to claim 14, wherein the providing the Intelligent Platform Management Interface service virtualizes the Intelligent Platform Management Interface service with respect to at least one of the plurality of processor modules and provides the Intelligent Platform Management Interface service in a virtualized form to an external managing server.
